**Europäisches Patentamt**

**European Patent Office**

**Office européen des brevets**

(19)

(11) Veröffentlichungsnummer : **0 383 366 B1**

(12)                    **EUROPÄISCHE PATENTSCHRIFT**

(45) Veröffentlichungstag der Patentschrift :
**13.05.92 Patentblatt 92/20**

(51) Int. Cl.⁵ : **A47J 39/00**, A47J 27/16,
F24C 15/32

(21) Anmeldenummer : **90106580.5**

(22) Anmeldetag : **03.02.87**

(54) **Verfahren zum Dampf-Garen von Nahrungsmitteln.**

(30) Priorität : **19.02.86 DE 8604451 U**

(43) Veröffentlichungstag der Anmeldung :
**22.08.90 Patentblatt 90/34**

(45) Bekanntmachung des Hinweises auf die
Patenterteilung :
**13.05.92 Patentblatt 92/20**

(84) Benannte Vertragsstaaten :
**CH DE FR IT LI**

(56) Entgegenhaltungen :
**EP-A- 0 244 538
CH-A- 630 240
DE-A- 1 906 711
DE-A- 2 043 546
DE-A- 2 747 097
FR-A- 2 351 360
US-A- 3 744 474
US-A- 3 949 733
US-A- 4 058 635**

(60) Veröffentlichungsnummer der früheren
Anmeldung nach Art. 76 EPü : **0 233 535**

(73) Patentinhaber : **Eloma GmbH Bedarfsartikel
zur Gemeinschaftsverpflegung
Rudolf-Diesel-Strasse 15
W-8031 Gernlinden (DE)**

(72) Erfinder : **Spann, Gustav
Heinrich-Feller-Strasse 80
W-8089 Emmering (DE)**

(74) Vertreter : **Bohnenberger, Johannes, Dr. et al
Meissner, Bolte & Partner Widenmayerstrasse
48 Postfach 86 06 24
W-8000 München 86 (DE)**

## Beschreibung

Die Erfindung betrifft ein Verfahren zum Dampf-Garen von Nahrungsmitteln in einem Gargerät sowie einer Vorrichtung zur Durchfuhrung des Verfahrens.

Aus der US-A-4 058 635 ist ein Gargerät bekannt, bei welchem zu verdampfendes Wasser über Sprühdüsen zerstäubt wird, die kurz vor der Ansaugöffnung des Gebläses angeordnet sind. Um bei einem solchen Gerät eine konstante, gleichmäßige Verdampfung zu erreichen, muß das Wasser mit relativ hohem Druck eingespritzt werden. Dies bedeutet, daß immer eine gewisse Mindestmenge an Wasser zugeführt werden muß. Sobald weniger Wasser zugeführt wird, reicht die Zerstäubung durch die Düsen nicht mehr aus, das Wasser tropft unzerstäubt zu Boden.

Aus der DE-A-26 05 816 ist ein Gargerät bekannt, bei welchem eine erwärmbare Platte mit mehreren Öffnungen vorgesehen ist, durch die Wasser gespüht wird. Bei Kontakt mit der Platte verdampft das Wasser. Bei dieser Anordnung kann es relativ leicht geschehen, daß die Öffnungen in der beheizbaren Platte durch Feststoffteilchen oder Verunreinigungen verstopft werden, wodurch die Dampferzeugung behindert wird.

Aus der OE-C 185 049 ist ein Gargerät bekannt, bei welchem Dampf in einem, durch Auffangbleche abgetrennten unteren Bereich des Garraums innerhalb einer Wanne erzeugt wird. Ein an der Decke des Garraums angebrachter Axial-Ventilator ist vorgesehen, der das Luft-Dampfgemisch umwälzen soll. Um zusätzlich Wasser einführen zu können, wird in dieser Druckschrift vorgeschlagen, Wasser von oben auf den Ventilator zu sprühen, dessen Drehrichtung während des Sprühens umzukehren... und so das zersprühte Wasser nach unten auf die Ware zu treiben. Eine Dampferzeugung durch das auf den Axial-Ventilator gesprühte Wasser wird nicht angestrebt.

Weiterhin sind sog. Heißumluft-Dämpfer bekannt, die ähnlich den eingangs genannten Geräten ein Gebläserad zur Erzeugung einer Luft-Umwälzung im Garraum aufweisen. Ein derartiges Gerät ist beispielsweise in der US-A-3 744 474 gezeigt. Bei diesen bekannten Geräten wird Dampf in einem Druckkessel erzeugt und über steuerbare Ventile in den Garraum eingeleitet. Diese Dampferzeugungseinrichtung macht das Gerät relativ aufwendig.

Bei allen oben genannten Geräten bzw. den entsprechenden Garverfahren wird die Zuführung von Dampf bzw. wird das Einsprühen von Wasser in Intervallen so geregelt, daß eine möglichst gleichbleibende Dampf-Atmosphäre mit möglichst gleichbleibender Temperatur erzielt wird. Diese Zweipunkt-Regelung ist bei den bekannten Verfahren auch notwendig, da ein Versprühen des Wassers nur mit einem bestimmten Druck und darum mit einer bestimmten Menge pro Zeiteinheit und auch das Erzeugen und Einlassen von Dampf nur in bestimmten Mindest-Strömen möglich ist. Die Steuerung bzw. Regelung der Wasser-/Dampfzuführung ist nicht nur aufwendig, durch den intermittierenden Betrieb kommt es auch zwangsläufig zu relativ starken Druckschwankungen innerhalb des Garraums. Es steht zwar der Garraum bei derartigen Geräten üblicherweise über einem bodenseitigen Ablauf in Strömungsverbindung, so daß ein Druckausgleich erfolgt, jedoch wird zu Beginn des Wasser-/Dampf-Einführtaktes zumindest ein gewisser Druckstoß erzeugt, der dazu führt, daß eine übermäßige Dampfmenge aus dem Ablauf entweicht. Dies wird im allgemeinen am Aufstellort als unangenehm empfunden.

Aus der in das Prioritätsintervall fallenden nachveröffentlichten EP-A-244 538 ist es bekannt, daß man bei einem Gargerät mit einem geschlossenen Garraum, einem Gebläse-Schaufelrad mit einer Nabe und ringsum angeordneten Schaufeln, einer Heizeinrichtung, die im wesentlichen rings um das Gebläse-Schaufelrad angeordnet ist, einer Wasserzuführungsleitung, deren Austrittsöffnung im Bereich der Nabe liegt, sowie einem Ablauf zum Abführen von Wasser und überschüssigem Dampf aus dem Garraum das Wasser einem in das Innere der Nabe eingesenkten konzentrischen Topf mit erhöhtem Rand zuführen kann. Das aus dem Topf bzw. über dessen Rand überlaufende, kontinuierlich zugeführte Wasser soll dann radial nach außen geschleudert und von den Schaufeln weiter zerstäubt werden. Wie die Druckschrift jedoch explizit angibt, soll das Wasser mit einem Druck von 2 - 7,6 bar, also einem nicht unbeträchtlichen Druck zugeführt werden. Die Regelung des Volumenstroms bei einem so hohen Druck ist aufwendig. Darüber hinaus wird zwar durch das dort gezeigte Topf-Prinzip eine relativ gleichmäßige Verteilung erzielt, andererseits aber wird das Wasser in relativ großen Tropfen radial nach außen geschleudert.

Der Erfindung liegt die Aufgabe zugrunde, ein Verfahren aufzuzeigen, bei welchem mit einfachen Mitteln eine variable und dennoch gleichmäßige Dampferzeugung ermöglicht wird, bei welcher der Druck im Garraum im wesentlichen konstant auf Atmosphärendruck bleibt.

Diese Aufgabe wird durch die Merkmale des Patentanspruches 1 vefahrensmäßig und durch die Merkmale des Patentanspruches 3 vorrichtungsmäßig gelöst.

Dadurch, daß die Nabe zur gleichmäßigen Verteilung des Wassers benutzt wird, welches dann über die Schaufeln weiterzerstäubt wird, ist eine extrem einfache Art der Dampferzeugung sichergestellt. Insbesondere können auch kleinste Wassermengen genausogut wie die von anderen Parametern abhängige Maximal-Wassermenge (pro Zeiteinheit) auf Grund der Wassermengen-unabhängig arbeitenden Schleuderwirkung der Nabe gleichmäßig zerstäubt werden. Dadurch, daß die Zuführung des Wassers kontinuierlich erfolgt, stellt sich ein konstantes Dampf-Klima im Garraum ein, was dem Gargut bekommt und außerdem die Erzeugung von in die Umgebung abströmenden Dampfstoßen verhindert.

Dadurch, daß das Wasser gemäß der vorliegenden Erfindung auf die sich drehende Außenfläche der Nabe aufgebracht wird, kommt es zu einer impulsförmigen Beschleunigung des auf die bewegte fläche treffenden Wassers, so daß dieses relativ fein zerstäubt wird.

Nachfolgend ist die Erfindung anhand von Ausführungsbeispielen näher beschrieben. Hierbei zeigen:

Fig. 1 eine Ausführungsform der Erfindung in schematischer Vorderansicht;

Fig. 2 die Anordnung nach Fig. 1 in Draufsicht;

Fig. 3 ein Blockschaltbild zur Erläuterung des Betriebes einer Vorrichtung nach den Fig. 1 oder 2; und

Fig. 4 ein Zeitdiagramm zur Erläuterung des Betriebes der Vorrichtung nach Fig. 3.

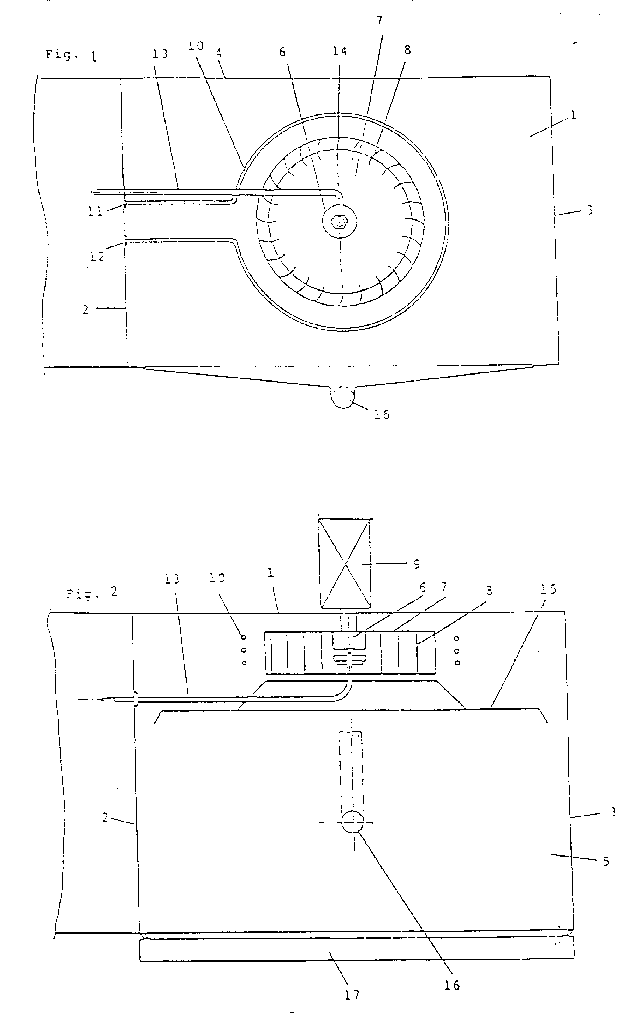

Das Gargerät besteht aus einem geschlossenen Raum mit einer Rückwand 1, mit Seitenwänden 2 und 3, einer Decke 4, einem Boden 5 und einer Tür 17 an der Vorderseite (siehe Fig. 1 bis 4). An der Rückwand 4 ist ein Schaufelrad gelagert, das eine Nabe 6, eine Scheibe 7 und am Umfang Schaufeln 8 aufweist. Zum Antrieb des Schaufelrades ist ein Elektromotor 9 vorgesehen, der außerhalb des Gehäuses angeordnet ist. Das Schaufelrad ist von einer Heizschlange 10 umgeben, deren Anschlüsse 11 und 12 dicht durch eine Seitenwand 2 geführt sind. Durch die Seitenwand 2 läuft auch eine Wasserzuführungsleitung 13, die - wie weiter unten näher erläutertüber ein Magnetventil mit einer Wasserzuführung in Verbindung steht.

Das Schaufelrad mit der Heizschlange 10 und der Wasserzuführungsleitung 13 ist gegenüber dem eigentlichen Garraum, in den die Speisen einbringbar sind, über eine abnehmbare Abdeckung 15 getrennt. Die Abdeckung 15 ist so ausgebildet, daß eine Luft- (und Dampf-) Zirkulation durch das Gebläserad aufrecht erhalten werden kann.

Der Boden 5 des Gerätes ist nach unten leicht gewölbt und weist an seinem tiefsten Punkt einen Ablauf 16 auf.

Wie aus den Fig. 1 und 2 hervorgeht, endet die Wasserzuführungsleitung 13 ohne Düse über der Nabe 6 derart, daß ausströmendes Wasser unabhängig vom Ausström-Druck auf die Nabe 6 auftrifft. Überraschenderweise hat es sich gezeigt, daß selbst langsam ausströmendes Wasser durch die drehende Nabe 6 verteilt und nachfolgend durch die Schaufeln 8 weiter zerstäubt wird, ohne daß eine Druck-Zerstäubung notwendig wäre.

Durch die Anordnung der elektrischen Heizelemente 10 als Wendel rings um das Gebläserad wird ein besonders günstiger Wärmeübergang erzielt.

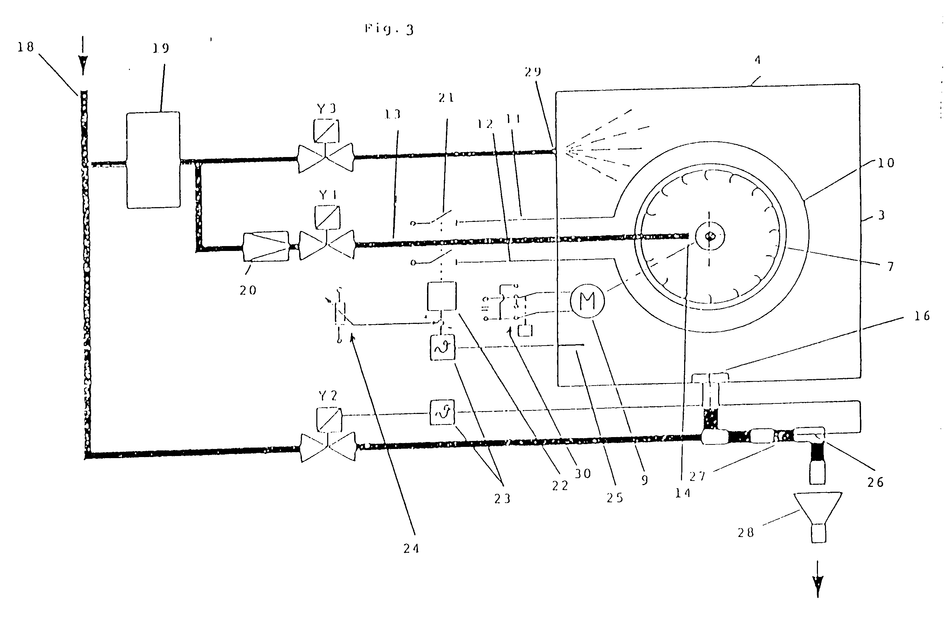

In Fig. 3 ist die Gesamtanordnung als Blockschaltbild gezeigt. Aus dieser Abbildung geht hervor, daß vor der Austrittsöffnung 14 in der Wasserzuführungsleitung 13 ein Magnetventil Y1 angeordnet ist, dem ein Druckminderer 20 vorgeschaltet ist. Bei der in den Fig. 1 und 2 gezeigten Ausführungsform ist dieser Druckminderer auf einen Druck von ca. 1 bar eingestellt. Der Druckminderer 20 steht eingangsseitig mit dem Auslaß eines Wasserenthärters 19 in Verbindung, der eingangsseitig mit einem Wasseranschluß 18 verbunden ist.

Neben der Wasserzuführung über die Austrittsöffnung 14 ist eine Beschwadungsdüse 29 vorgesehen, über die bei Öffnen eines Magnetventiles Y3, das in einer Leitung zwischen Beschwadungsdüse 29 und Enthärter 19 angeordnet ist, Wasser in den Garraum (im Betrieb als Heißumluft-Ofen) eingesprüht werden kann.

Der Elektromotor 9 ist bei der in Fig. 3 gezeigten Ausführung als Gleichstrommotor ausgeführt und steht über einen Umpolschalter 30 mit einer Gleichstromquelle in Verbindung. Selbstverständlich ist es auch möglich, andere umsteuerbare Elektromotoren mit entsprechenden Umsteuermitteln anstelle des Gleichstrommotors vorzusehen. Bei einer entsprechenden Ausbildung der Schaufeln 8 des Gebläserades ist es möglich, je nach Drehrichtung des Elektromotors 9 eine höhere oder niedrigere Luftförderleistung zu erzielen, wobei die Drehzahl des Gebläserades gleich bleibt. Wenn man somit den Elektromotor 9 in einer Drehrichtung betreibt, die im Hinblick auf die Konstruktion der Schaufeln 8 an sich "falsch" ist, so erzielt man eine gute Zerstäubungswirkung und stellt dennoch sicher, daß nicht zuviel Wasser durch den ansonsten starken Luftstrom in den Garraum getrieben wird.

Die Heizelemente 10 sind über einen steuerbaren Schalter 21 (Relais) an das elektrische Stromnetz (nicht gezeigt) angeschlossen. Der steuerbare Schalter 21 wird vom Ausgang eines (Zweipunkt-) Reglers 22 gesteuert, an dessen Eingang ein Vergleich zwischen einem Soll-Wert und einem Ist-Wert durchgeführt wird. Der Soll-Wert ist über einen Sollwertsteller 24 einstellbar, während der Ist-Wert über einen Temperaturfühler 25 im Garraum mit nachgeschaltetem Meßwandler 23 stammt. Je nach Einstellung des Sollwertstellers 24 wird so mit die Temperatur im Garraum im wesentlichen konstant gehalten.

Der am Boden 5 des Garraumes angebrachte Ablauf 16 mündet in einen Ablauftrichter 28, so daß überschüssiges Wasser aus dem Garraum abgeführt werden kann. Nachdem aber beim Einsprühen und Verdampfen von Wasser ein Überdruck im Garraum entsteht und somit auch Dampf aus dem Garraum abgeführt werden muß, ist dem Ablauf 16 ein Kondensator 27 nachgeschaltet, der über direktes Einführen von (kaltem) Frischwasser den Dampf kondensiert. Zur Steuerung der Frischwasserzuführung ist ein Magnetventil Y2 vorgesehen, das über einen Temperaturfühler 26 am Ende des Kondensators 27 mit nachgeschaltetem Meßwandler 23 angesteuert wird. Übersteigt die Temperatur am Ende des Kondensators 27 einen fest eingestellten Sollwert, so wird das Ventil Y2 geöffnet und Frischwasser aus dem Wasseranschluß 18 dem Kondensator 27 zugeführt und zusammen mit dem kondensierten Dampf in den Ablauftrichter 28 entlassen.

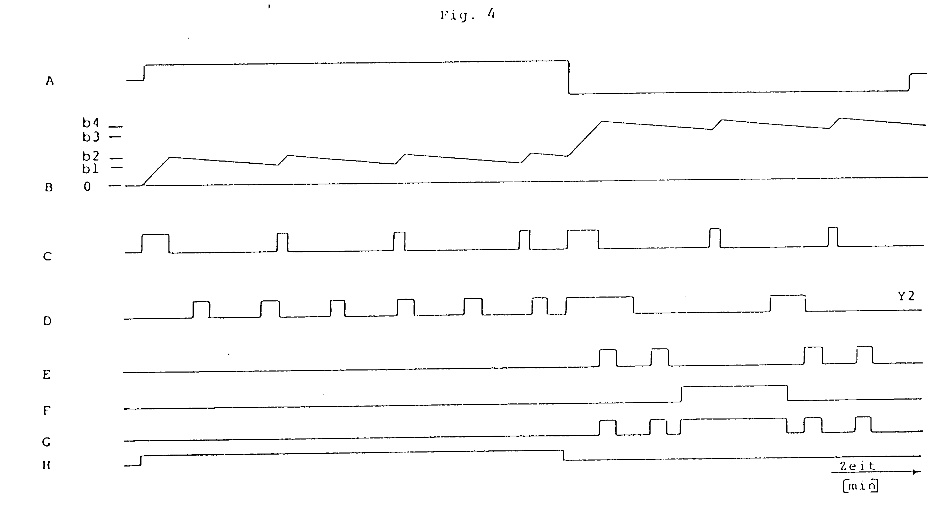

Im folgenden wird der Betrieb des Gerätes anhand von Fig 4 näher erläutert, wobei das Gerät zunächst als Dämpfer und dann als reiner Heißumluft-Ofen arbeitet.

Fig. 4A zeigt die Drehzahl und Drehrichtung des Elektromotors 9; Fig. 4B den Temperaturverlauf im Inneren des Garraumes; Fig. 4C den Schaltzustand des Schalters 21 (oben = an; unten = aus); Fig. 4D den Schaltzustand des Ventiles Y2; Fig. 4E den Schaltzustand einer Beschwadungsautomatik (oben = an); Fig. 4F den Schaltzustand einer Handbetätigungstaste (oben = an); Fig. 4G den Schaltzustand des Ventils Y3 (oben = an) und Fig. 4H den Schaltzustand des Ventiles Y1 (oben = an).

Das in Fig. 4 gezeigte "Programm" erläutert den Betrieb des erfindungsgemäßen Gerätes zuerst als Dämpfer und dann als Heißumluft-Ofen. Während der ersten Phase läuft der Motor 9 in einer Richtung, die einem geringen Luftförderstrom entspricht. Die Verzögerungszeit am Beginn des Programms stellt sicher, daß das Gerät erst dann zu laufen beginnt, wenn die Tür sicher nicht mehr geöffnet wird (Verzögerungszeit = 15 sec.).

Sobald das Schaufelrad zu drehen beginnt, setzt die Heizung ein und heizt den Innenraum des Gerätes bis zur Temperatur t2 auf. Bei Erreichen der Temperatur T2 schaltet der Regler 22 den Schalter 21 aus, worauf der Innenraum des Gerätes sich langsam wieder abkühlt, und zwar bis zur Temperatur t1. Bei Erreichen der Temperatur t1 beginnt ein erneuter Heizvorgang. Wenn nach der Dämpfphase, die bei 100° C, aber auch darunter stattfinden kann, die Heißluft-Phase beginnt, so wird die Temperatur im Innenraum des Gerätes bis auf den Temperaturwert t4 angehoben und kann danach wieder zum Temperaturwert t3 absinken, um dananch wieder angehoben zu werden usw.

Während des Dämpfens wird immer wieder das Ventil Y2 geöffnet, um im Kondensator 27 aus dem Geräteinnenraum ausströmenden Dampf zu kondensieren. Wenn nach dem Übergang von der Dämpf- zur Heißluftphase das im Innenraum des Gerätes befindliche Rest-Wasser verdampft und durch die Öffnung 16 im Boden des Gerätes austritt, so wird über eine längere Zeit hinweg das Ventil Y2 geöffnet, da die Temperatur am Temperaturfühler 26 über längere Zeit hinweg einen höheren Wert erreicht.

Beim Gerät ist eine Zeit-Automatik vorgesehen, die ein intermittierendes Einsprühen von Wasser über die Beschwadungsdüse 29 während der Heißluft-Phase ermöglicht. Der Schaltzustand dieser Automatik ist in Fig. 4E gezeigt. Darüber hinaus kann bei Bedarf auch ein von Hand ausgelöstes Signal gegeben werden (Fig. 4F), um eine größere Wassermenge einzuspritzen. Während dieser Zeit ist die Automatik (Fig. 4E) stillgelegt. Das Ventil Y3 reagiert auf beide Signale (Oder-Funktion), wie dies in Fig. 4G gezeigt ist.

Während des gesamten Dämpfvorganges ist das Ventil Y1 geöffnet, wie dies in Fig. 4H gezeigt ist. Hinsichtlich dieser Betriebsweise unterscheidet sich das erfindungsgemäße Gerät ganz wesentlich von Geräten mit einem Dampferzeuger, da derartige Dampferzeuger intermittierend (gepulst) Dampf einblasen, was einen wesentlich höheren Steueraufwand und auch Verschleiß mit sich bringt. Darüber hinaus wird beim erfindungsgemäßen Gerät eine ganz einfache Temperaturregelung vorgenommen, wobei durch den ständigen Wasserzufluß ein konstantes Dampfmilieu erzeugbar ist. Überschüssiges Wasser, das also nicht an den Heizelementen 10 oder an den aufgeheizten Innenwänden des Gerätes verdampft, fließt ganz einfach durch den Ablauf 16 ab. Auf diese Weise wird mit einfachsten Mitteln ein besonders gleichmäßiger Betrieb des Dämpfers gewährleistet.

## Patentansprüche

1. Verfahren zum Dampf-Garen von Nahrungsmitteln in einem Gerät, umfassend einen geschlossenen Garraum, ein Gebläse-Schaufelrad (6 - 8) mit einer Nabe (6) und ringsum angeordneten Schaufeln (8), eine Heizeinrichtung (10), die im wesentlichen rings um das Gebläse-Schaufelrad (8) angeordnet ist, eine Wasserzuführungsleitung (13), deren Austrittsöffnung (14) im Bereich der Nabe (6) liegt, sowie einen Ablauf (16) zum Abführen von Wasser und überschüssigem Dampf aus dem Garraum, wobei das Wasser im wesentlichen drucklos der Nabe (6) derart zugeführt wird, daß die drehende Nabe (6) das Wasser verteilt, welches nachfolgend durch die Schaufeln (8) weiter zerstäubt wird, und daß die Zuführung des Wassers kontinuierlich erfolgt.

2. Verfahren nach Anspruch 1, dadurch gekennzeichnet, daß das Gebläse-Schaufelrad während des Dampf-Garens in eine Richtung gedreht wird, welche eine geringere Luft-Förderleistung bewirkt als eine Drehung in der anderen Richtung.

3. Vorrichtung zur Durchführung des Verfahrens nach Anspruch 1, umfassend einen geschlossenen Garraum, ein Gebläse-Schaufelrad (6 - 8) mit einer Nabe (6) und ringsum angeordneten Schaufeln (8), eine Heizeinrichtung (10), die im wesentlichen rings um das Gebläse-Schaufelrad angeordnet ist, eine Wasserzuführungsleitung (13), deren Austrittsöffnung (14) im Bereich der Nabe (6) liegt, sowie einen Ablauf (16) zum Abführen von Wasser und überschüssigem Dampf aus dem Garraum, wobei die Austrittsöffnung (14) derart relativ zur Nabe (6) angeordnet ist, daß Wasser im wesentlichen drucklos auf die Nabe (6) so zuführbar ist, daß diese bei Drehung das Wasser verteilt, welches nachfolgend durch die Schaufeln (8) weiter zerstäubbar ist, und wobei Wasser kontinuierlich zuführbar ist.

## Claims

1. A method of steam-cooking foodstuffs in an apparatus comprising a closed cooking chamber, a fan blade wheel (6-8) having a hub (6) and blades (8) arranged therearound, heating means (10) substantially arranged around the fan blade wheel (8), a water supply conduit (13) having its outlet opening (14) located in the vicinity of the hub (6) as well as drain means (16) for draining water and excess steam from the cooking chamber, the water being supplied to the hub (6) substantially pressureless so that the rotating hub (6) distributes the water which is subsequently further atomized by the blades (8), and that water is supplied continuously.

2. The method according to claim 1, characterized in that during steam cooking the fan blade wheel is rotated in a direction which effects a lower delivery of air than a rotation in the other direction.

3. An apparatus for carrying out the method according to claim 1, comprising a closed cooking chamber, a fan blade wheel (6-8) having a hub (6) and blades (8) arranged therearound, heating means (10) substantially arranged around the fan blade wheel, a water supply conduit (13) having its outlet opening (14) located in the vicinity of the hub (6) as well as drain means (16) for draining water and excess steam from the cooking chamber, said outlet opening (14) being arranged relative to the hub (6) so that water can be supplied to the hub (6) substantially pressureless so that upon rotation the hub distributes the water which is subsequently further atomized by the blades (8), and water being supplied continuously.

## Revendications

1. Procédé pour cuire des aliments à la vapeur dans un appareil, comportant un compartiment de cuisson fermé, une roue à aubes de ventilateur (6 - 8) avec un moyeu (6) et des aubes (8) périphériques, un dispositif de chauffage (10), essentiellement disposé autour de la roue à aubes (8), une conduite d'alimentation en eau (13), dont l'orifice de sortie (14) se situe dans la zone du moyeu (6), ainsi qu'une décharge (16) pour l'évacuation de l'eau et de la vapeur excédentaire du compartiment de cuisson, l'eau étant envoyée sur le moyeu (6) essentiellement sans pression, de telle sorte que le moyeu rotatif (6) répartit l'eau, qui subit une pulvérisation ultérieure par les aubes (8), et que l'alimentation en eau est assurée en continu.

2. Procédé suivant la revendication 1, caractérisé en ce que la roue à aubes de ventilateur tourne dans un sens de rotation, pendant la cuisson à la vapeur, qui provoque un débit d'air moins élevé qu'une rotation dans l'autre sens.

3. Dispositif pour la réalisation du procédé suivant la revendication 1, comportant un compartiment de cuisson fermé, une roue à aubes de ventilateur (6 - 8) avec un moyeu (6) et des aubes (8) périphériques, un dispositif de chauffage (10), essentiellement disposé autour de la roue à aubes, une conduite d'alimentation en eau (13), dont l'orifice de sortie (14) se situe dans la zone du moyeu (6), ainsi qu'une décharge (16) pour l'évacuation de l'eau et de la vapeur excédentaire du compartiment de cuisson, l'orifice de sortie (14) étant disposé par rapport au moyeu (6), de manière à pouvoir envoyer l'eau, essentiellement sans pression, sur le moyeu (6), de telle sorte que ce dernier répartit l'eau, qui peut subir une pulvérisation ultérieure par les aubes (8), et l'eau pouvant être amenée en continu.

Fig. 1

Fig. 2

Fig. 3

Fig. 4

Zeit [min]

EP 0 383 366 B1

8